# EUROPÄISCHE PATENTANMELDUNG

(11) **EP 3 196 890 A1**
(43) Veröffentlichungstag der Anmeldung: **26.07.2017**
(21) Anmeldenummer: 15842637.9
(22) Anmeldetag: 14.04.2015
(51) Int. Cl.: G21D 7/00, E04C 1/40, E04H 5/02, G21F 9/06

(54) **VERFAHREN ZUR ERRICHTUNG EINES BAUWERKS AUS BAUBLÖCKEN UND/ODER -PLATTEN**

(30) Priorität: 15.09.2014 RU 2014137187; 15.09.2014 RU 2014137189
(71) Anmelder: Eksorb Ltd., Ekaterinburg 620027 (RU)
(72) Erfinder: REMEZ, Victor Pavlovich, Ekaterinburg 620027 (RU)
(74) Vertreter: Jeck, Anton
(86) Internationale Anmeldenummer: PCT/RU2015/000243
(87) Internationale Veröffentlichungsnummer: WO 2016/043618

(57) **Zusammenfassung**

Die Erfindung bezieht sich auf den Aufbau von Bauwerken, wie KKW-Gebäude, die unter Einsatz von monolithischen Bausteinen oder Platten aus Beton oder Stahlbeton errichtet werden. Der Baustein oder die Platte enthalten einen ausbetonierten Behälter mit Komponenten zur Sorptionsentziehung von Radionukliden oder toxischen Stoffen aus dem Wasser. Der Behälter hat Elemente, um das verunreinigte Wasser zuzuführen und das gereinigte Wasser abzuleiten. Das Bauverfahren umfasst den Aufbau von Bauwerken aus genannten Bausteinen oder Platten. Das Verfahren zur Fertigung des Bausteins oder der Platte umfasst die Formung eines Betonkörpers, in dem mindestens ein Behälter mit Komponenten zur Wasserreinigung ausbetoniert ist, wobei der Behälter Stutzen oder Flansche aufweist, um das verunreinigte Wasser zuzuführen und das gereinigte Wasser abzuleiten. Die Arbeitssicherheit während der Errichtung der Bauwerke wird sichergestellt, und eine eventuelle Verbreitung der Radionuklide außerhalb der Grenzen des Bauwerkes wird verhindert.

## Beschreibung

Die vorliegende Erfindung bezieht sich auf das Bauwesen, und zwar auf die Konstruktionen von Fertigteilbauten bzw. Massivbauten, die neu aufgebaut bzw. modernisiert werden. Dabei kann es sich um KKW-Bauwerke, Boden- bzw. Unterwassergründungen solcher Bauwerke, Stützmauern, Lager zur Endlagerung von konzentrierten toxischen und radioaktiven Abfällen usw. handeln, die unter Einsatz von monolithischen Bausteinen und/oder Platten aus Beton errichtet werden. Die Erfindung bezieht sich auch auf die Ausführung der für solche Bauwerke vorgesehenen Bausteine oder Platten, die auf der Baustelle oder im Werk vorgefertigt werden.

Der nächstliegende Stand der Technik unter den bekannten Bauten ist ein Bauwerk, das aus Bausteinen errichtet wird. Die Bausteine werden in Solllage zusammengefügt. Die Bausteine sind in Form von Betonbehältern ausgebildet, die Container mit radioaktiven Abfällen aufnehmen. Die Container werden mit radioaktiven Abfällen vor dem Einsetzen in die Betonbehälter und ins Bauwerk gefüllt. Dabei ist der Raum zwischen den Bausteinwänden und den Containerwandungen ebenfalls mit einer Mischung aus radioaktiven Abfällen und einem Bindestoff gefüllt, allerdings in einer geringeren Konzentration als die in den Containern. Der Bausteinbehälter wird oben mit einem Deckel abgedeckt, der damit mittels lösbarer Verbindungen verbunden ist (Patent US 5545796, 1996).

Aus dem Stand der Technik ist ein Verfahren zur Fertigung eines Bauelements in Form eines Bausteins bekannt. Der Baustein enthält einen Halter, in dessen Innenraum ein mit radioaktiven Abfällen gefüllter Behälter eingesetzt wird. Dabei ist der Raum zwischen den Wandungen des Behälters und den Wänden des ein Modul bildenden Halters mit einem Schüttstoff gefüllt (Patent DE 4302536, 1994).

Der nächstliegende Stand der Technik ist ein Verfahren zur Fertigung von Bauelementen in Form von Bausteinen, die als Halter aus Beton ausgebildet sind. Der Innenraum des Halters nimmt mit radioaktiven oder toxischen Abfällen gefüllte Behälter auf. Der Raum zwischen den Wänden des Bausteins und den Wandungen der Behälter ist ebenfalls mit einer Mischung aus radioaktiven Abfällen und einem Bindestoff allerdings in einer geringeren Konzentration gefüllt. Der Innenraum des Bausteins wird mit einem Deckel oben abgedeckt, welcher damit mittels lösbarer Verbindungen verbunden ist (Patent US 5545796, 1996).

Die bekannten Verfahren zum Aufbau von Bauwerken aus den dafür zusammengefügten Bausteinen und/oder Platten sind dadurch benachteiligt, dass mit radioaktiven Abfällen umgegangen werden muss, um die damit gefüllten Behälter in die Bausteine einzusetzen. Darüber hinaus müssen diese Bausteine mit darin enthaltenen radioaktiven Abfällen transportiert werden. Das beeinträchtigt die Arbeitssicherheit und setzt zusätzlichen Arbeitsaufwand voraus, um jeweilige Maßnahmen zu treffen, Schutzmittel zu gebrauchen und das Personal zu schützen.

Die bekannten Konstruktionen (Einrichtungen) sind dadurch benachteiligt, dass sie nur dazu dienen können, um die vorher anderweitig in die Behälter gesammelten radioaktiven Abfälle zu lagern. Dabei müssen die radioaktiven Abfälle umgeladen werden, um die Behälter zu füllen. Damit der Baustein als Bauelement zur Errichtung von z.B. einer Gründung bzw. einer Stützwand eingesetzt werden kann, muss er in eine Solllage gebracht werden. Das beeinträchtigt die Arbeitssicherheit. Die bekannten Lösungen können die weiter unten gestellte technische Aufgabe nicht lösen, weil sie erst nach einem Notfall zum Einsatz kommen und aufwändige Maßnahmen, mehr Platz und Zeit zur Bekämpfung voraussetzen.

Darüber hinaus haben die bekannten Einrichtungen den Nachteil, dass sie als Baustoffe nicht verwendet werden können, denn ihre Festigkeit hängt von den Eigenschaften der darin enthaltenen radioaktiven Abfälle ab.

Die Aufgabe der vorliegenden Erfindung ist es, die Arbeitssicherheit während der Fertigung der Bausteine und/oder Platten und während der Errichtung von Bauwerken daraus sicherzustellen sowie die eventuelle Verbreitung von Radionukliden in flüssigem Medium über die Grenzen des aus solchen Bausteinen und/oder Platten aufgebauten Bauwerks infolge der Notfälle darin oder in unmittelbarer Nähe dazu zu verhindern. Dies sollte nämlich infolge der Erweiterung von Funktionalitäten der im Bauwerk eingesetzten Bauelemente erreicht werden. Denn die Errichtung eines Bauwerkes mit den im Voraus (während der Errichtung) In seiner Konstruktion bzw. seinen Konstruktionselementen eingebrachten Mitteln zur Sorptionsentziehung des darin bzw. daneben gebildeten Wassers mit toxischen Stoffen und/oder Radionukliden, vorteilhaft Caesium, bedarf keiner gefährlichen Versetzung der einzelnen radioaktive Abfälle enthaltenden Behälter, um diese nachher in den Schutzcontainer bei der Einlagerung einzusetzen.

Die Zeitnähe des zu lösenden Problems bestätigen die Forschungen, die im Zeitraum zwischen 2004 und 2007 durchgeführt worden sind. Fünf Entdeckungsreisen sollten die Cs¹³⁷-Konzentration im Wasser der Wassersäule in der Nähe der Siedlung Rokkasho, Aomori, Japan ermitteln. Hier fand ein Probebetrieb des Werks von Japan Nuclear Fuel Ltd. für Kernbrennstoff-Wiederaufarbeitung im März 2006 statt. Es wurden umfangreiche Seewasserproben an der Stelle der Filtersysteme und der Konzentrationssysteme in verschiedenen Wassertiefen in freiem Wasser entnommen. Feste Teilchen wiesen kein Cs¹³⁷ im untersuchten Gebiet nach. Das gelöste Cs¹³⁷ war nur temporär dynamisch, insbesondere im Oberflächenwasser. Aufgrund der erhaltenen Daten wurde geschlossen, dass das untersuchte Gebiet keine tatsächliche Verseuchung mit Cs¹³⁷ aufweist. Die Cs¹³⁷-Konzentrationen variieren unter dem Einfluss der Strömungsmischung zwischen Tsugaru und Oyashio. Es wurde das Zeit- und Raumverteilungsverhalten von Cs¹³⁷ im Abwasser der Anlage zur Kernbrennstoff-Wiederaufarbeitung in Rokkasho, Aomori, Japan ermittelt (Takahiro Nakanishi, J Radioanal Nucl Chem [2010] 283:831-838).

Die gestellte Aufgabe wird wie folgt gelöst.
- Gemäß dem Baustein- bzw. Plattenbauverfahren wird das Bauwerk vorteilhaft aus Betonbausteinen oder Betonplatten errichtet. Die Betonbausteine oder Betonplatten enthalten Elemente, vorteilhaft Rohre, Stutzen oder Flansche, um das Radionuklid, vorteilhaft Caesium, und/oder toxische Stoffe zuzuführen und das gereinigte Wasser abzuleiten. Die Betonbausteine oder Betonplatten werden ausbetoniert oder gemäß dem genehmigten Bauplan verlegt. Dabei wird oder ist ein Behälter erfindungsgemäß mit Komponenten zur Sorptionsentziehung von Radionukliden, vorteilhaft Caesium, und/oder toxischen Stoffen aus dem Wasser in den Innenraum von wenigstens jeweils einem Baustein oder einer Bauplatte während der Fertigung gesetzt. Dabei kann der Baustein oder die Platte verlegt werden, worin der Inhalt des im Baustein oder in der Platte bei dessen/deren Fertigung ausbetonierten Behälters durch die Einführung von Härterkomponenten oder selbsthärtenden Komponenten vergossen wird, nachdem die Komponenten die Aufnahmekapazität der Sorptionsmittel zur Entziehung von Radionukliden, vorteilhaft Caesium, oder toxischen Stoffen aus dem Wasser erschöpft haben. Wenigstens ein Teil der Bausteine und/oder Platten kann so angeordnet werden, dass mindestens eine von deren Oberflächen mit dem von Radionukliden zu reinigenden Wasser kontaktieren kann. Nachdem die Aufnahmekapazität der im Behälter enthaltenen Sorptionsmittel erschöpft ist, wird der Behälterinhalt vergossen (eingebunden), und der Baustein oder die Platte bleibt im Bauwerk in dessen bzw. deren Solllage. Dabei kann das Bauwerk so ausgeführt sein, dass die Bausteine und/oder Platten als Gründung (Fundament), Mauer, Deckplatte (Zwischendecke), Stützwand angeordnet werden, die das gefahrenträchtige innerhalb oder außerhalb des errichteten Bauwerks gelegene Objekt abgrenzen. Werden mehrere Behälter im Baustein oder in der Platte deponiert, so können solche Behälter miteinander parallel und/oder hintereinander gekoppelt sein.
- Gemäß dem Baustein- oder Plattenfertigungsverfahren werden Bausteine oder Platten gefertigt, indem ein vorteilhaft mehrlägiger Körper aus Beton oder Stahlbeton geformt wird. Erfindungsgemäß wird im Körper mindestens ein Behälter mit Komponenten zur Sorptionsentziehung von toxischen Stoffen und/oder Radionukliden, vorteilhaft Caesium, aus dem Wasser ausbetoniert. Der Behälter hat Stutzen oder Flansche, um das mit toxischen Stoffen und/oder Radionukliden, vorteilhaft Caesium, verunreinigte Wasser zuzuführen und das gereinigte Wasser abzuleiten. Während der Formgebung des Bausteins und/oder der Platte kann dabei darin ein Gefäß mit einem Mittel zum Vergießen (Einbinden) der ausgeschöpften Sorptionsmittel zur Entziehung von Radionukliden oder toxischen Stoffen aus dem Wasser eingebracht sein. Als Beton kann Schwefelbeton oder Polymerbeton verwendet werden. Dabei kann Schwefelbeton oder Polymerbeton als eine der Lagen zum Einsatz kommen.
- Das Bauwerk ist aus Bausteinen und/oder Bauplatten errichtet. Mindestens ein Baustein oder eine Bauplatte enthält mindestens einen Behälter, der in seinem bzw. ihrem Beton- oder Stahlbetonkörper ausbetoniert ist. Der Behälter enthält Komponenten zur nachfolgenden Sorptionsentziehung von Radionukliden, vorteilhaft Caesium, oder toxischen Stoffen aus dem Wasser. Der Behälter ist mit Elementen, vorteilhaft Rohren, Stutzen oder Flanschen, versehen, um das das Radionuklid, vorteilhaft Caesium, enthaltende Wasser zuzuführen und das gereinigte Wasser abzuleiten. Dabei kann das Bauwerk in dem von Radionukliden zu reinigenden Wasser angeordnet sein, das mit mindestens einer der Oberflächen des Bauwerks im Kontakt steht. Das Bauwerk kann eine Gründung oder eine Stützwand sein. Das Bauwerk kann an der Grenzfläche des zu reinigenden Wassers und des gereinigten Wassers angeordnet sein. Das Bauwerk kann als Kaskade der miteinander parallel und/oder hintereinander kommunizierenden Gefäße für Wasser mit verschiedenen Reinigungsgraden gestaltet sein. Das Bauwerk kann mit einem darin oder außerhalb eingebrachten Mittel zum Vergießen (Einbinden) der gebrauchten Behälter mit Komponenten zur Sorptionsentziehung von Radionukliden oder toxischen Stoffen aus dem Wasser versehen sein, wobei das Mittel mit vorteilhaft jedem genannten Behälter kommunizieren kann.
- Der Baustein ist in Form eines vorteilhaft mehrlagigen Körpers aus Beton oder Stahlbeton ausgebildet. Im Körper ist mindestens ein Behälter ausbetoniert, der Stutzen oder Flansche hat, um das mit toxischen Stoffen und/oder Radionukliden, vorteilhaft Caesium, verunreinigte Wasser zuzuführen und abzuleiten. Der Behälter enthält Komponenten zur Sorptionsentziehung von toxischen Stoffen und/oder Radionukliden, vorteilhaft Caesium, aus dem Wasser. Die im Baustein eingebetteten Behälter (mindestens zwei) können miteinander serienweise oder parallel gekoppelt sein. Der Baustein kann mit Mitteln versehen sein, um die Wege (Leitungen) über die Stutzen oder Flansche abzusperren. Die Absperrung kann mechanisch oder durch die Zufuhr einer selbsthärtenden Komponente erfolgen. Die selbsthärtende Komponente wird dann aus einem vorteilhaft im Baustein angeordneten Gefäß mit dieser Komponente zugeführt. Als Beton für den Baustein kann Schwefelbeton oder Polymerbeton verwendet werden. Schwefelbeton oder Polymerbeton kann als eine der Lagen des Bausteinkörpers angewendet werden. Die Mittel zur mechanischen Absperrung der Wege (Leitungen) über die Stutzen oder Flansche und/oder für die Zufuhr der selbsthärtenden Komponente können mit einem ferngesteuerten Antrieb versehen sein.
- Bei der Bauplatte kann es sich um eine monolithische Platte oder vorgefertigte Platte handeln. Die Platte ist in Form eines vorteilhaft mehrlagigen Körpers aus Beton oder Stahlbeton ausgebildet. Im Körper ist mindestens ein Behälter ausbetoniert, der einen Stutzen oder einen Flansch hat, um das mit toxischen Stoffen und/oder Radionukliden, vorteilhaft Caesium, verunreinigte Wasser zuzuführen und abzuleiten. Der Behälter enthält Komponenten zur Sorptionsentziehung von toxischen Stoffen und/oder Radionukliden, vorteilhaft Caesium, aus dem Wasser. Werden in der Platte mehrere Behälter ausbetoniert, so sind diese miteinander serienweise oder parallel gekoppelt. Darüber hinaus kann die Bauplatte mit Mitteln versehen sein, um die Wege (Leitungen) über die Stutzen oder Flansche mechanisch abzusperren, und/oder mit Mitteln, um eine selbsthärtende Komponente zuzuführen. Diese Mittel sind vorteilhaft mit einem ferngesteuerten Antrieb versehen.

Unter dem Begriff "monolithisch" wird ein Erzeugnis verstanden, das unmittelbar an der Baustelle in seiner Solllage gefertigt wird.

Die Erfindung wird nun anhand der beiliegenden Zeichnungen näher erläutert. Es zeigen:

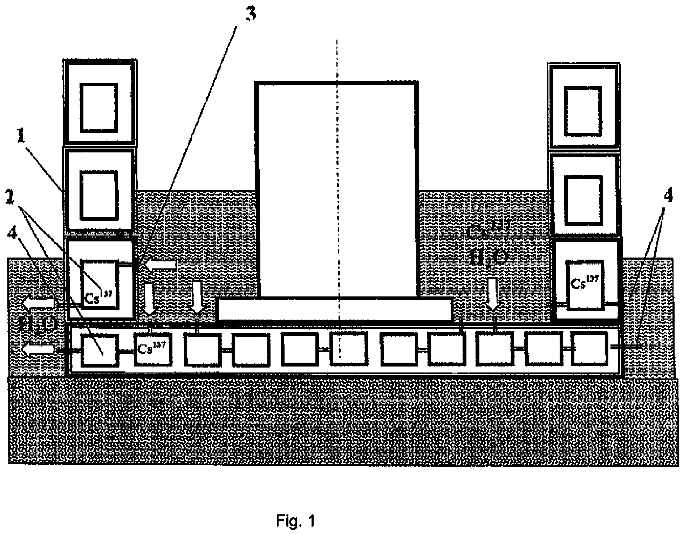

- Fig. 1: eine schematische Darstellung des Bauwerks aus Bausteinen und -platten, die nach dem oben beschriebenen Verfahren gefertigt sind; diese enthalten Gefäße mit einem Sorptionsmittel, wobei diese Gefäße noch mit keinen Radionukliden gefüllt sind,

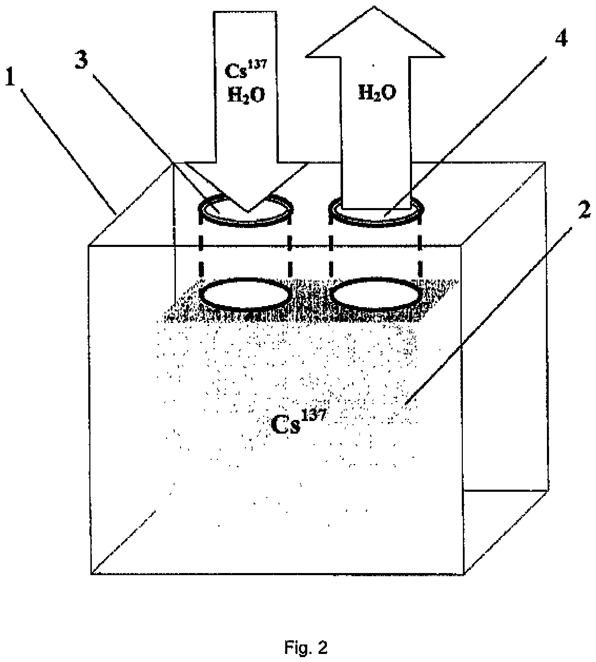

- Fig. 2: ein Beispiel zur Fertigung des monolithischen Bausteins mit einem darin während der Fertigung angeordneten Behälter; der Behälter enthält Komponenten zur nachfolgenden Sorptionsentziehung von Radionukliden, vorteilhaft Caesium, oder toxischen Stoffen aus dem Wasser; die Pfeile zeigen die Bewegungsrichtungen über den Baustein der mit Radionukliden verunreinigten Flüssigkeit und des Reinwassers und

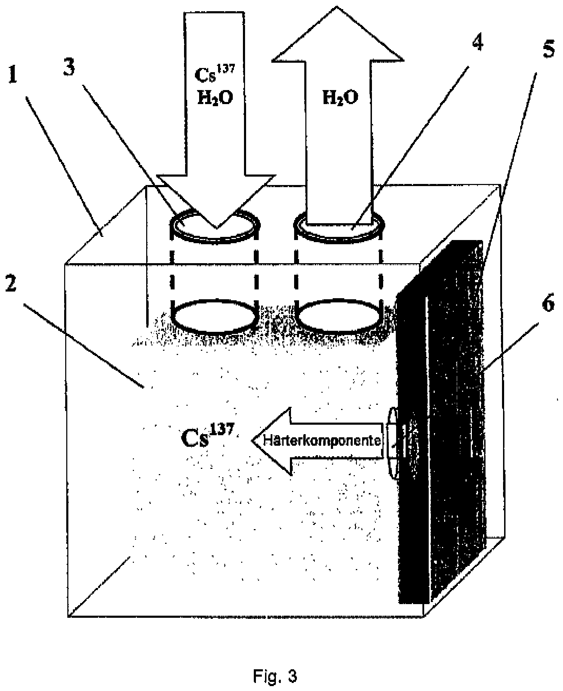

- Fig. 3: ein Ausführungsbeispiel der beanspruchten technischen Lösung in Form einesmonolithischen Bausteins nach Fig. 2; allerdings ist im Baustein bei seiner Fertigung ein Gefäß mit einem Mittel eingebettet, das das im Behälter des Bausteins enthaltene und mit Radionukliden oder toxischen Stoffen verunreinigte Medium härten lässt.

Der Baustein oder die Platte gemäß der Erfindung werden in Form eines vorteilhaft mehrlagigen Körpers 1 aus Beton (Betongemisch) oder Stahlbeton gefertigt. Der Baustein oder die Platte werden unter Einhaltung sämtlicher technischer Vorschriften und Anforderungen hergestellt, die für die Stahlbetonerzeugnisse in der höchsten Güteklasse (Bewehrung, Zusätze für das Zementgemisch zur Erhöhung der Feuchtebeständigkeit, Betondichte und -festigkeit) gelten. Der Betonbaustein oder die Betonplatte sind dafür bestimmt, um den darin angeordneten mindestens einen Behälter (Filter mit einem selektiven Sorptionsmittel) mit Komponenten zur Sorptionsentziehung von toxischen Stoffen und/oder Radionukliden, vorteilhaft Caesium, aus dem zu reinigenden Wasser maximal zu schützen. Der Baustein oder die Platte müssen konstruktionsmäßig gegen jegliche Außenwirkungen gut geschützt sein. Sie müssen die radioaktive Strahlung der im Behälter (Filter) konzentrierten Isotope im benötigten Umfang absorbieren und die Anforderungen an das Bauelement beim Aufbau von Sonderanlagen (Lager für radioaktive Abfälle, Deponien für toxische Stoffe usw.) erfüllen. Im Baustein ist mindestens ein Behälter 2 bei Bausteinfertigung ausbetoniert. Der Behälter 2 hat Stutzen oder Flansche, um das mit toxischen Stoffen und/oder Radionukliden, vorteilhaft Caesium, verunreinigte Wasser zuzuführen 3 oder das gereinigte Wasser abzuleiten 4. Der Behälter 2 enthält Komponenten zur Sorptionsentziehung von toxischen Stoffen und/oder Radionukliden, vorteilhaft Caesium, aus dem Wasser, wobei diese Komponenten vor oder nach dem Einsetzen des Behälters in den Baustein oder nach dem Einbau des Bausteins Ins Bauwerk eingebracht sind. Der Baustein oder die Platte können mit Mitteln (in den Figuren nicht abgebildet) versehen sein, um die Wege (Leitungen) über die Stutzen oder Flansche mechanisch oder durch die Zufuhr einer selbsthärtenden Komponente aus einem vorteilhaft im Baustein (in der Platte) angeordneten Gefäß mit solcher Komponente abzusperren. Bei der Fertigung des Bausteins kann als Beton Schwefelbeton oder Polymerbeton und als eine der Lagen des Bausteins Schwefelbeton oder Polymerbeton angewendet sein, vorausgesetzt, dass solche Betonarten die oben genannten Anforderungen erfüllen. Die Mittel zur mechanischen Absperrung der Wege (Leitungen) über die Stutzen oder Flansche und/oder für die Zufuhr der selbsthärtenden Komponente können mit einem ferngesteuerten Antrieb (in den Figuren nicht abgebildet) versehen sein. Der Baustein oder die Platte können Mittel für die Zufuhr der selbsthärtenden Komponente aufweisen. Die Zufuhr erfolgt dabei aus einem vorteilhaft darin angeordneten Gefäß 5 mit solcher Komponente, die damit durch eine Materialleitung 6 verbunden ist, oder aus einem Gefäß, das in unmittelbarer Nähe, z. B. in einem anderen Baustein oder einer anderen Platte angeordnet ist.

Beim Aufbau des Bauwerks aus Bausteinen und/oder Bauplatten enthält mindestens ein Baustein oder eine Bauplatte mindestens einen der oben beschriebenen in seinem bzw. ihrem Beton- oder Stahlbetonkörper ausbetonierten Behälter 2. Der Behälter 2 enthält Komponenten zur nachfolgenden Sorptionsentziehung von Radionukliden, vorteilhaft Caesium, oder toxischen Stoffen aus dem Wasser. Um den technischen Effekt zu verstärken, kann das Bauwerk als Kaskade von miteinander parallel und/oder hintereinander kommunizierenden Gefäßen für Wasser mit verschiedenen Reinigungsgraden ausgebildet sein. Dabei kann das Bauwerk in dem zu reinigenden Wasser, das z. B. aus einem Sammelbecken zugeführt ist, oder in einem natürlichen reinigungsbedürftigen Wasserbecken angeordnet sein. In diesem Fall steht mindestens eine Oberfläche des Bauwerks in Kontakt mit Wasser. Je nach Projekt kann es sich beim Bauwerk um eine Gründung oder eine Stützwand handeln. Das Bauwerk kann an der Grenzfläche zwischen dem zu reinigenden aktiven Wasser und dem gereinigten Wasser aufgebaut sein. Das Bauwerk kann mit einem darin oder außerhalb eingebrachten Mittel zum Vergießen (Einbinden) der gebrauchten Behälter mit Komponenten zur Sorptionsentziehung von Radionukliden oder toxischen Stoffen aus dem Wasser versehen sein, das mit vorteilhaft jedem genannten Behälter kommuniziert.

### Ausführungsbeispiel der technischen Lösung

Es wurde ein zylinderförmiger Behälter (Filter) in die Mitte eines Betonwürfels bei seiner Fertigung eingesetzt. Die Würfelkantengröße betrug 1,7 Meter. Der Durchmesser des 0,70 m hohen zylinderförmigen Behälters betrug 0,30 m. Der Behälter enthielt 50 kg selektives Sorptionsmittel auf der Basis von Berliner Blau (modifiziertes Eisenhexacyanidoferrat). 200 Kubikmeter Naturwasser (Süßwasser oder ein Gemisch mit Seewasser) wurden über die Stutzen des Behälters (des Filters) durchgepumpt. Dieses Wasser war vorher benutzt, um die Gebäude usw. in einer aktivierten Zone zu dekontaminieren. Der Gehalt an Radionuklid Cs¹³⁷ (Caesium-137) in dem zu reinigenden Wasser lag bei ca. 10000 Bq /L. Die Wasseraktivität nach dem Filter betrug max. 5 Bq/L (die Ableitung in die Umgebung gemäß den gültigen hygienischen Normen kann ohne Einschränkungen erfolgen).

Nachdem die Zufuhr des zu reinigenden Wassers abgeschlossen war, wurden der Behälter (Filter) und die Wege (Leitungen) im Betonbaustein, über die das Wasser zugeführt wurde, mit einem selbsthärtenden Bindestoff gefüllt, um das Sorptionsmittel einzubinden und den Behälter (Filter) abzudichten.

Die Messungen zeigten, dass die Gammastrahlungsdosisleistung an allen Oberflächen des Betonwürfels (der den Behälter [Filter] mit dem verbrauchten Sorptionsmittel enthielt) den Gamma-Untergrund der Umgebung (unter 0,5 Rem /Jahr) nicht überschritt. Folglich kann dieses Erzeugnis als Bauelement eingesetzt sein.

## Patentansprüche

1. Baustein- bzw. Plattenbauverfahren, wonach ein Bauwerk aus vorteilhaft aus Beton gefertigten Bausteinen und/oder Platten errichtet wird, wobei die Bausteine oder die Platten Elemente, vorteilhaft Rohre, Stutzen oder Flansche aufweisen, um das mit Radionukliden, vorteilhaft Caesium, und/oder toxischen Stoffen verunreinigte Wasser zuzuführen und das gereinigte Wasser abzuleiten, wobei ferner die Bausteine oder die Platten ausbetoniert oder gemäß einem genehmigten Bauplan verlegt werden und wobei ein Behälter mit Komponenten zur Sorptionsentziehung von Radionukliden, vorteilhaft Caesium, oder toxischen Stoffen aus dem Wasser in den Innenraum von mindestens jeweils einem Baustein oder einer Bauplatte während dessen bzw. deren Fertigung eingesetzt wird.

2. Verfahren nach Anspruch 1,
**dadurch gekennzeichnet,**
**dass** der Baustein und/oder die Platte verlegt werden und
**dass** der Inhalt des im Baustein oder in der Platte bei dessen bzw. deren Fertigung vergossenen Behälters durch die Einführung von Härterkomponenten oder selbsthärtenden Komponenten eingebunden wird, nachdem die Komponenten die Aufnahmekapazität der Sorptionsmittel zur Entziehung von Radionukliden, vorteilhaft Caesium, und/oder toxischen Stoffen aus dem Wasser erschöpft haben.

3. Verfahren nach Anspruch 1,
**dadurch gekennzeichnet,**
**dass** mindestens ein Teil der Bausteine und/oder der Platten so angeordnet ist,
**dass** mindestens eine von deren Oberflächen mit dem von Radionukliden zu reinigenden Wasser kontaktieren kann,
**dass**, nachdem die Aufnahmekapazität der im Behälter enthaltenen Sorptionsmittel erschöpft ist, der Inhalt der Sorptionsmittel eingebunden wird und
**dass** der Baustein oder die Platte im Bauwerk in dessen bzw. deren Solllage erhalten bleiben.

4. Verfahren nach einem der Ansprüche 1 bis 3,
**dadurch gekennzeichnet,**
**dass** das Bauwerk so gestaltet ist, dass die Bausteine und/oder die Platten als Gründung, Mauer, Deckplatte, Stützwand angeordnet werden, die ein gefahrenträchtiges innerhalb oder außerhalb des errichteten Bauwerks gelegenes Objekt abgrenzen.

5. Verfahren nach Anspruch 1,
**dadurch gekennzeichnet,**
**dass** beim Einsetzen von mehreren Behältern in den Baustein oder in die Platte diese miteinander parallel und/oder hintereinander gekoppelt werden.

6. Bauwerk aus Bausteinen und/oder Bauplatten, wobei mindestens ein oder eine davon mindestens einen in seinem bzw. ihrem Beton- oder Stahlbetonkörper ausbetonierten Behälter enthält, der Behälter Komponenten zur nachfolgenden Sorptionsentziehung von Radionukliden, vorteilhaft Caesium, oder toxischen Stoffen aus dem Wasser aufweist und Elemente, vorteilhaft Rohre, Stutzen oder Flansche enthält, um das mit Radionukliden, vorteilhaft Caesium, verunreinigte Wasser zuzuführen und das gereinigte Wasser abzuleiten.

7. Bauwerk nach Anspruch 6,
**dadurch gekennzeichnet,**
**dass** es in dem zu reinigenden Wasser angeordnet ist, das mit mindestens einer der Oberflächen des Bauwerks in Kontakt steht.

8. Bauwerk nach Anspruch 6 oder 7,
**dadurch gekennzeichnet,**
**dass** es als Gründung oder Stützwand ausgebildet ist.

9. Bauwerk nach Anspruch 8,
**dadurch gekennzeichnet,**
**dass** es an der Grenzfläche zwischen dem zu reinigenden Wasser und dem gereinigten Wasser angeordnet ist.

10. Bauwerk nach Anspruch 6,
**dadurch gekennzeichnet,**
**dass** es im Falle des Einsatzes von mehreren Behältern als Kaskade von miteinander parallel und/oder hintereinander kommunizierenden Gefäßen für Wasser mit verschiedenen Reinigungsgraden ausgebildet ist.

11. Bauwerk aus Bausteinen nach Anspruch 6,
**dadurch gekennzeichnet,**
**dass** es mit einem darin oder außerhalb angeordneten Mittel zum Vergießen der gebrauchten Behälter mit Komponenten zur Sorptionsentziehung von Radionukliden oder toxischen Stoffen aus dem Wasser versehen ist, wobei das Mittel mit vorteilhaft jedem der genannten Behälter kommuniziert.

12. Verfahren zur Fertigung des Bausteins oder der Platte, indem ein vorteilhaft mehrlagiger Körper aus Beton oder Stahlbeton geformt ist, worin mindestens ein Behälter mit Komponenten zur Sorptionsentziehung von toxischen Stoffen und/oder Radionukliden, vorteilhaft Caesium, aus dem Wasser ausbetoniert ist, wobei der Behälter Stutzen oder Flansche aufweist, um das mit toxischen Stoffen und/oder Radionukliden, vorteilhaft Caesium, verunreinigte Wasser zuzuführen und das gereinigte Wasser abzuleiten.

13. Verfahren nach Anspruch 12,
**dadurch gekennzeichnet,**
**dass** beim Formen des Bausteins und/oder der Platte ein Gefäß mit einem Mittel zum Einbinden der ausgeschöpften Sorptionsmittel zur Sorptionsentziehung von Radionukliden oder toxischen Stoffen aus dem Wasser darin eingebracht wird.

14. Verfahren nach Anspruch 12,
**dadurch gekennzeichnet,**
**dass** als Beton für den gesamten Körper oder für eine seiner Lagen Schwefelbeton oder Polymerbeton eingesetzt ist.

15. Monolithische(r) oder vorgefertigte(r) Baustein oder Bauplatte in Form eines vorteilhaft mehrlagigen Körpers aus Beton oder Stahlbeton, in dem mindestens ein Behälter ausbetoniert ist, wobei der Behälter Stutzen oder Flansche aufweist, um das mit toxischen Stoffen und/oder Radionukliden, vorteilhaft Caesium, verunreinigte Wasser zuzuführen und abzuleiten, und wobei der Behälter Komponenten zur Sorptionsentziehung der toxischen Stoffe und/oder Radionuklide, vorteilhaft Caesium, aus dem Wasser enthält.

16. Baustein oder Bauplatte nach Anspruch 15,
**dadurch gekennzeichnet,**
**dass** beim Einsatz von mehreren Behältern mindestens zwei davon serienweise oder parallel miteinander gekoppelt sind.

17. Baustein oder Bauplatte nach Anspruch 15 oder 16,
**dadurch gekennzeichnet,**
**dass** er bzw. sie mit Mitteln versehen sind, um die Wege über die Stutzen oder Flansche mechanisch oder durch die Zufuhr einer selbsthärtenden Komponente abzusperren,
**dass** die selbsthärtende Komponente aus einem vorteilhaft im Baustein oder in der Bauplatte angeordneten Gefäß mit solcher Komponente zugeführt ist und dass die Mittel zur mechanischen Absperrung der Wege über die Stutzen oder Flansche und/oder für die Zufuhr der selbsthärtenden Komponente mit einem ferngesteuerten Antrieb versehen sind.

18. Baustein oder Bauplatte nach einem der Ansprüche 15 bis 17,
**dadurch gekennzeichnet,**
**dass** als Beton für den gesamten Körper oder für eine seiner Lagen Schwefelbeton oder Polymerbeton eingesetzt ist.
